# EUROPEAN PATENT SPECIFICATION

(11) **EP 3 002 456 B1**
(45) Date of publication and mention of the grant of the patent: **26.04.2017**
(21) Application number: 15187527.5
(22) Date of filing: 30.09.2015
(51) Int. Cl.: F03D 80/80

(54) **WIND POWER GENERATOR**
WINDKRAFTGENERATOR
GENERATEUR D'ENERGIE EOLIENNE

(30) Priority: 30.09.2014 JP 2014200456
(43) Date of publication of application: 06.04.2016
(73) Proprietor: Hitachi, Ltd., Tokyo 100-8280 (JP)
(72) Inventor: HIRANO, Masahiro, Tokyo, 100-8280 (JP); OONO, Kousaku, Tokyo, 100-8280 (JP); YU, Juhyun, Tokyo, 100-8280 (JP); MOGAKI, Tomoko, Tokyo, 100-8280 (JP)
(74) Representative: MERH-IP Matias Erny Reichl Hoffmann Patentanwälte PartG mbB

(56) References cited:
- EP-A1- 2 636 898
- US-A1- 2013 084 177

## Description

### FIELD OF THE INVENTION

The present invention relates to a wind power generator, especially to a suitable wind power generator provided with a nacelle which is configured by plural panels and the crust of which is formed by a nacelle cover having dividable structure.

### BACKGROUND OF THE INVENTION

Recently, wind power generators as a mainstay of renewable energy have been widely installed. The wind power generator transmits the rotational power of a hub that supports blades to a generator, rotates a rotor of the generator, generates power, the hub is configured by the generator, a gearbox, a controller, electric equipment and others, and the hub is attached to an end of a nacelle.

In the meantime, the output of the wind power generator has been recently increased and the size of equipment that configures the wind power generator is becoming larger. As a result, the nacelle is also becoming larger and a nacelle cover that forms a crust of the nacelle is configured by plural panels.

For the abovementioned nacelle cover, a function for preventing rainwater, dust and others from penetrating inside the nacelle is demanded, and the maintenance of equipment such as the generator, the gearbox housed in the nacelle and the facility of disassembly in the carriage in/out of them are also demanded.

A nacelle cover configured by plural panels in a conventional type wind power generator is disclosed in International Publication Nos. WO 2012/060370 and WO 2012/077618. In International Publication No. WO 2012/060370, structure is disclosed in which a sealing member is provided substantially in parallel with a joint in the joint of plural upside nacelle covers. Further, in International Publication No. WO 2012/077618, structure that an upside nacelle cover covers a joint in the joint of plural side nacelle covers is disclosed.

Since the joint of the nacelle covers is directly exposed to the weather in the configuration described in International Publication No. WO 2012/060370, the sealing member and others in the joint may be easily deteriorated. Therefore, in long-term use, the tightness against the penetration of rainwater and dust from the outside (hereinafter called water-tightness) may be impaired.

Further, since a bolt utilized for junction is arranged in a position in which it is directly exposed to the weather in the configuration described in International Publication No. WO 2012/077618, the bolt may be corroded and a sealing member for closing a bolt hole may be easily deteriorated. Therefore, in long-term use, water-tightness may be impaired.

International Publication Nos. WO 2012/060370 and WO 2012/077618 relate to the structure of a top face and a side of the nacelle cover. However, the water-tightness of a bottom is also an important subject. As for the bottom of the nacelle cover, it is also an important subject to prevent lubricating oil from leaking out of the nacelle when the lubricating oil leaks out of equipment inside the nacelle.

The present invention is made in view of the abovementioned matters and its object is to provide a wind power generator that prevents rainwater and dust from penetrating into a joint of nacelle covers regardless of a location and can maintain this effect for a long term.

### SUMMARY OF THE INVENTION

The wind power generator according to the present invention is based upon a wind power generator which is provided with a rotor configured by a hub and blades, a generator connected to the rotor via a main shaft connected to the hub, a nacelle that houses at least the generator and journals the rotor via the main shaft and a tower that supports the nacelle at the top so as to achieve the object and in which the nacelle is configured by plural panels and its crust is formed by a nacelle cover having dividable structure, and has a characteristic that bent parts are provided in a joint of ends of the plural nacelle covers and a communicating part with the outside, an inside communicating part communicating with the inside of the nacelle and an intermediate communicating part that makes the inside communicating part and the communicating part with the outside communicate are formed between the bent parts in the joint of the ends of the adjacent nacelle covers.

Further, the wind power generator according to the present invention is based upon a wind power generator which is provided with a rotor configured by a hub and blades, a generator connected to the rotor via a main shaft connected to the hub, a nacelle that houses at least the generator and journals the rotor via the main shaft and a tower that supports the nacelle at the top and in which the nacelle is configured by plural panels and its crust is formed by a nacelle cover having dividable structure so as to achieve the object, and has a characteristic that a top face, a side and a bottom of the nacelle are respectively configured by plural panels, its crust is formed by the nacelle cover having dividable structure, bent parts are provided in a joint of ends of respective plural nacelle covers to be the top face, the side and the bottom of the nacelle and a communicating part with the outside, an inside communicating part communicating with the inside of the nacelle and an intermediate communicating part that makes the inside communicating part and the communicating part with the outside communicate are formed between the bent parts in the joint of the ends of the adjacent nacelle covers to be the top face, the side and the bottom of the nacelle.

According to the present invention, rainwater and dust are prevented from penetrating into the joint of the nacelle covers regardless of a location and this effect can be maintained for a long term.

### BRIEF DESCRIPTION OF THE DRAWINGS

Fig. 1 is a general view showing a first embodiment of a wind power generator according to the present invention;
Fig. 2 shows schematic structure inside a nacelle in the first embodiment of the wind power generator according to the present invention;
Fig. 3 is a perspective view showing joints of nacelle covers in the first embodiment of the wind power generator according to the present invention;
Fig. 4 is a sectional view showing the joints of the nacelle covers viewed along a broken line 81 shown in Fig. 3 in the first embodiment of the wind power generator according to the present invention;
Fig. 5 is a partial sectional view showing the details of the joint of the nacelle covers (in an area 83 shown in Fig. 4) in the first embodiment of the wind power generator according to the present invention;
Fig. 6 is a sectional view showing the details of the joint of the nacelle covers (in the area 83 shown in Fig. 4) in the first embodiment of the wind power generator according to the present invention and showing a state in which raindrops penetrate through a communicating part with the outside;
Fig. 7 is a sectional view showing a state in which some of upside nacelle covers are detached from the state shown in Fig. 4 and viewed along the broken line 81 shown in Fig. 3;
Fig. 8 is a sectional view showing joints of nacelle covers in a second embodiment of the wind power generator according to the present invention and viewed along a broken line 82 shown in Fig 3;
Fig. 9 is a partial sectional view showing the details of the joint of the nacelle covers (in an area 85 shown in Fig. 8) in the second embodiment of the wind power generator according to the present invention;
Fig. 10 is a sectional view showing a state in which some of upside nacelle covers and some of side nacelle covers are detached from the state shown in Fig. 8 and viewed along the broken line 82 shown in Fig. 3;
Fig. 11 is a partial sectional view showing the details of joints of nacelle covers (in an area 84 shown in Fig. 4) in a third embodiment of the wind power generator according to the present invention; and
Fig. 12 is a sectional view showing the details of the joints of the nacelle covers (in the area 84 shown in Fig. 4) in the third embodiment of the wind power generator according to the present invention and showing a state in which lubricating oil that leaks out of equipment inside a nacelle accumulates.

### DETAILED DESCRIPTION OF THE PREFERRED EMBODIMENTS

A wind power generator according to the present invention will be described on the basis of embodiments shown in the drawings below. In each embodiment, the same reference numeral is used for the same component.

### First Embodiment

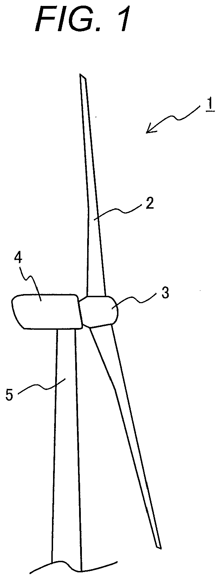

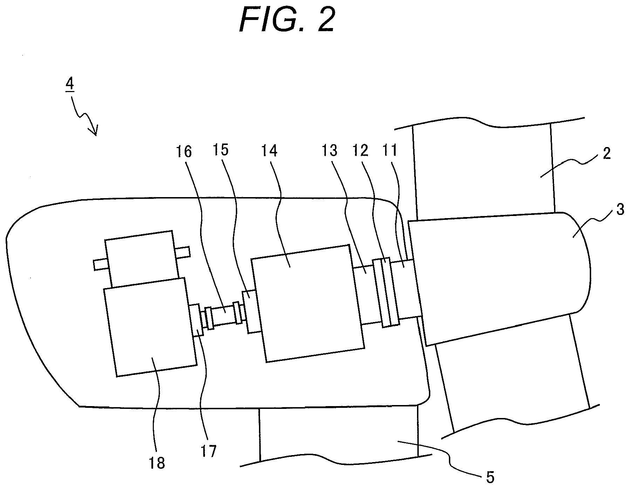

Referring to Figs. 1 to 6, the first embodiment that embodies the wind power generator according to the present invention will be described below. First, Fig. 1 shows the whole configuration of the wind power generator and Fig. 2 shows schematic structure of the inside of a nacelle including the generator and a gearbox inside.

As shown in Fig. 1, the wind power generator 1 is schematically configured by a blade 2 that catches wind, a hub 3 that supports the blade 2, the nacelle 4 that supports the hub 3 and a tower 5 that supports the nacelle 4, and a rotor is configured by the hub 3 and the blade 2. In this case, the blade 2 has a rotational degree of freedom in a substantially longitudinal direction of the blade 2, the hub 3 has it in its substantially horizontal direction, and the nacelle 4 has a rotational degree of freedom in its substantially vertical direction.

As shown in Fig. 2, inside the nacelle 4, a gearbox 14, a generator 18 and others are included. A hub rotating shaft 11 connected to the hub 3 and an input shaft 13 to the gearbox 14 are connected via a joint 12, an output shaft 15 from the gearbox 14 and an input shaft 17 to the generator 18 are connected via a joint 16, and a main shaft 17 is configured by the hub rotating shaft 11, the input shaft 13 to the gearbox, the output shaft 15 from the gearbox and the input shaft 17 to the generator.

In the abovementioned configuration, when the blade 2 catches wind, the hub 3 is rotated, this torque is transmitted to the hub rotating shaft 11, the joint 12, the input shaft 13 to the gearbox, the gearbox 14, the output shaft 15 from the gearbox, the joint 16, the input shaft 17 to the generator and a rotor of the generator 18, and power generation is performed.

When strong wind blows, power transmission devices, gearing parts and others respectively of equipment included in the blade 2 and the nacelle 4 are prevented from being damaged by adjusting the orientation of the blade 2 so that projected area in a wind direction decreases. Further, while power generation is performed, adjustment is made so that the blade 2 is directed in a direction in which it can efficiently catch wind by turning the nacelle 4 for the tower 5 according to a wind direction.

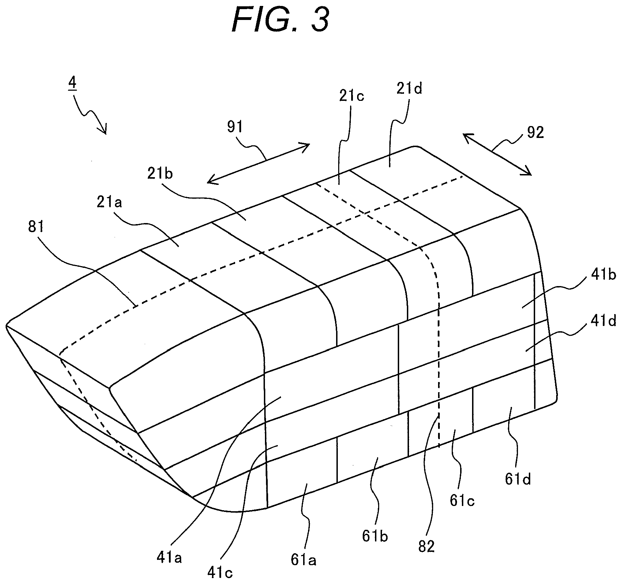

Next, Fig. 3 shows a state in which plural pieces of a nacelle cover are assembled to be the nacelle 4 which is configured by plural panels and a crust of which is formed by the nacelle cover having dividable structure.

As shown in Fig. 3, the nacelle cover is configured by upside nacelle covers 21a, 21b, 21c, 21d, side nacelle covers 41a, 41b, 41c, 41d, bottom nacelle covers 61a, 61b, 61c, 61d and others, and is configured so that the nacelle cover can be divided into plural panels. The upside nacelle covers 21a, 21b, 21c, 21d and the bottom nacelle covers 61a, 61b 61c, 61d are continuously arranged in an axial direction of the main shaft and as to the side nacelle covers 41a, 41b, 41c, 41d, the side nacelle covers 41a, 41b and the side nacelle covers 41c, 41d respectively continuously arranged in the axial direction of the main shaft are arranged with them piled in a vertical direction of the nacelle 4 (on the opposite side of the side nacelle covers 41a, 41b, 41c, 41d, side nacelle covers 41e, 41f, 41g, 41h are similarly arranged though they are not especially shown).

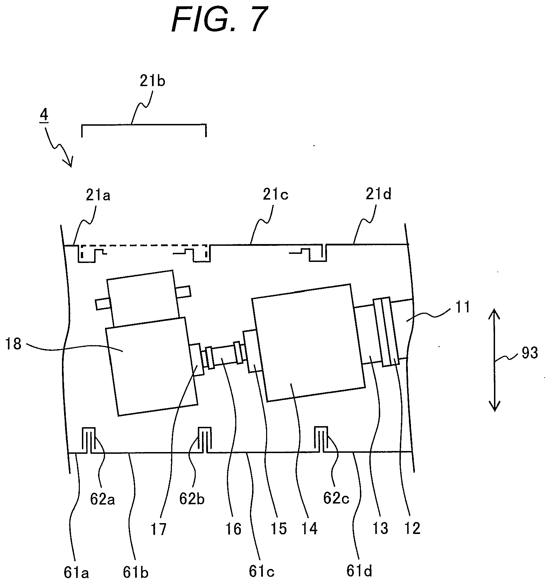

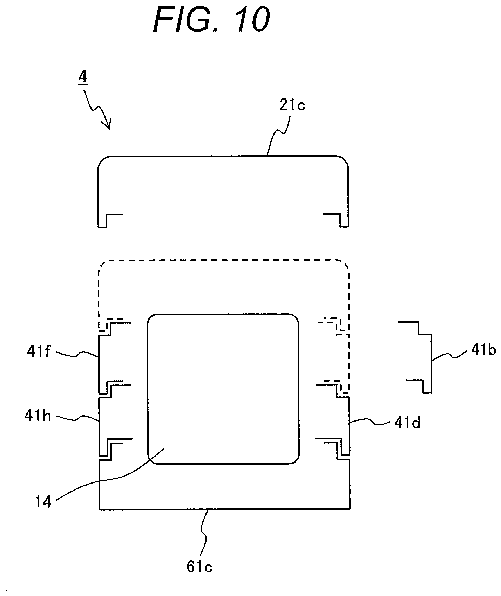

Moreover, the nacelle cover has structure that enables inside approach by removing a part of the nacelle covers (see Figs. 7 and 10) though the parts are described later in the maintenance and the attachment/detachment of the equipment inside the nacelle 4.

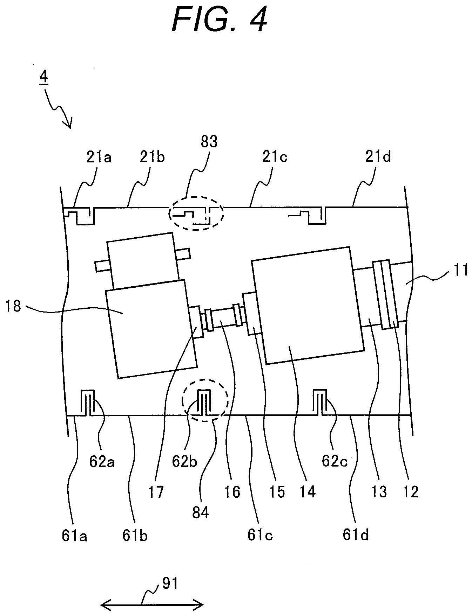

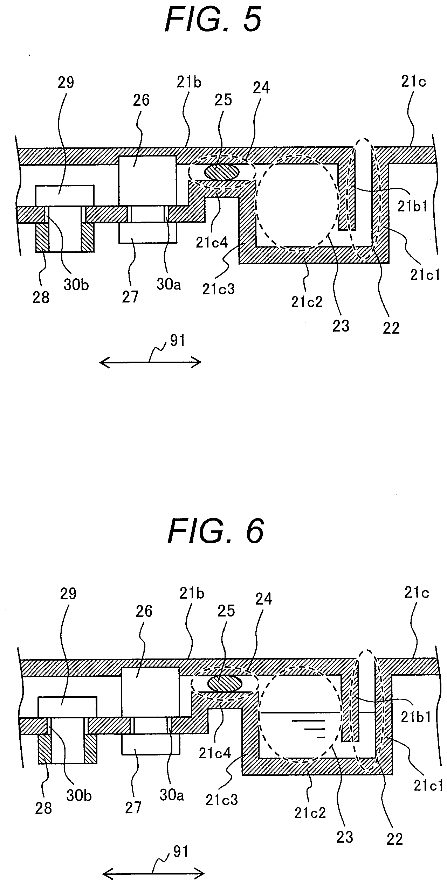

Next, Fig. 4 shows a section viewed along a broken line 81 shown in Fig. 3 in the wind power generator in the first embodiment of the present invention and Fig. 5 is an enlarged view showing an area 83 encircled by a circle shown by a broken line in Fig. 4.

As shown in Fig. 4, the upside nacelle covers 21a, 21b, 21c, 21d are divided substantially in a direction shown by an arrow 91 (in the axial direction of the main shaft). An end of the upside nacelle cover 21a covers an end of the adjacent upside nacelle cover 21b from its upside (it can also be said that the end of the upside nacelle cover 21b enters the downside of the end of the adjacent upside nacelle cover 21a), the other end of the upside nacelle cover 21b covers an end of the adjacent upside nacelle cover 21c from its upside, and a joint of the end of the upside nacelle cover 21c and an end of the upside nacelle cover 21d also has a similar configuration.

As shown in Fig. 5, the end of the upside nacelle cover 21b and the end of the upside nacelle cover 21c are respectively provided with a bent part (a joint of the other upside nacelle covers also has similar structure), and a communicating part 22 with the outside, an inside communicating part 24 communicating with the inside of the nacelle 4 and an intermediate communicating part 23 that makes the inside communicating part 24 and the communicating part 22 with the outside communicate are configured by combining these bent parts.

To explain in the concrete using Fig. 5, as to the plural joints of the upside nacelle covers 21a, 21b, 21c, 21d, the end 21b1 of the adjacent upside nacelle cover 21b is bent and extended inside in an L type, the end 21c1 of the adjacent upside nacelle cover 21c is bent and extended inside in parallel with the L-type end 21b1 of the upside nacelle cover 21b via predetermined clearance, and the communicating part 22 with the outside is formed between bent parts of the ends 21b1 and 21c1 respectively bent and extended inside of the upside nacelle covers 21b and 21c.

Further, the edge (to be a part shown by a reference numeral 21c2) bent and extended in an L type of the end 21c1 of the upside nacelle cover 21c is bent and extended to be parallel with a part except the end 21b1 of the upside nacelle cover 21b (an outer surface of the upside nacelle cover 21b), an extended edge (to be a part shown by as reference numeral 21c3) of the bent part 21c2 is bent and extended outside to be parallel with the L-type ends 21b1, 21c1 of the upside nacelle covers 21b, 21c, and the intermediate communicating part 23 that makes the inside communicating part 24 and the communicating part 22 with the outside communicate is formed in a part encircled by the part 21c3 bent and extended outside, the part 21c2 bent and extended to be parallel with the part except the end (21b1) of the upside nacelle cover 21b, the upside nacelle cover 21b and one end 21b1 bent and extended in the L type of the upside nacelle cover.

Further, an edge (to be a part shown by a reference numeral 21c4) of the part (the part shown by the reference numeral 21c3) bent and extended outside of the upside nacelle cover 21c is bent and extended to be parallel with the part (the part shown by the reference numeral 21b) except the end of the upside nacelle cover 21b, the inside communicating part 24 communicating with the inside of the nacelle 4 is formed between the bent and extended part (21c4) and the upside nacelle cover 21b, and a sealing member 25 made of silicon or fluororesin is arranged in the inside communicating part 24.

Furthermore, the upside nacelle cover 21b and the upside nacelle cover 21c are fixed using a nut 26 fixed inside the upside nacelle cover 21b and a bolt 27, and the upside nacelle cover 21c is fixed to a frame 28 fixed to the tower 5 by a bolt 29. That is, the upside nacelle cover 21c is fixed to the frame 28 fixed to the tower 5, and the upside nacelle cover 21b and the upside nacelle cover 21c are fastened by inserting the bolt 27 into the nut 26 fixed inside the upside nacelle cover 21b.

The nut 26 has such thickness that top faces of the upside nacelle cover 21b and the upside nacelle cover 21c are at the substantially same level and the sealing member 25 is appropriately compressed (thickness to the extent that the sealing member 25 is not damaged even if it is compressed).

Furthermore, holes 30a, 30b with which the bolt 27 and the bolt 29 communicate and which are provided to the nacelle cover 21c are a hole longer in the direction shown by the arrow 91 (in the axial direction of the main shaft) and the clearance in the direction shown by the arrow 91 in the communicating part 22 with the outside can be adjusted by the holes.

In the abovementioned configuration in this embodiment, when rain falls, rain drops penetrate through the communicating part 22 with the outside and as shown in Fig. 6, rainwater accumulates in the communicating part 22 with the outside and the intermediate communicating part 23. However, these parts function as a channel, and the rainwater is discharged in a direction shown by an arrow 92 shown in Fig. 3. When much rain falls, a level of rainwater accumulating in the communicating part 22 with the outside and the intermediate communicating part 23 may reach a level of the inside communicating part 24. However, the penetration of the rainwater into the inside of the nacelle 4 can be prevented by the sealing member 25 and this effect can be maintained for a long term.

As the sealing member 25 is basically not exposed to the weather, the deterioration hardly progresses and it can be expected that water-tightness is maintained for a long term. Furthermore, in the maintenance of the equipment inside the nacelle 4 and replacement work, the upside nacelle covers of a required number have only to be detached, and for example, when access to the generator 18 shown in Fig. 4 is frequent, a shape of the end of the upside nacelle cover has only to be determined so that the upside nacelle cover 21b close to a location in which the generator 18 is installed can be detached earliest as shown in Fig. 7.

Furthermore, as shown in Fig. 5, as the nut 26 used for fixing the upside nacelle cover 21b and the upside nacelle cover 21c is provided inside the upside nacelle cover 21b and the nut is not protruded from the outer surface of the nacelle 4, the nut does not disturb a flow of air around the nacelle 4 and does not impair its hydrodynamic performance. This is especially effective in a so-called downwind-type wind power generator provided with the blade 2 on the side of downwind of the nacelle 4.

### Second Embodiment

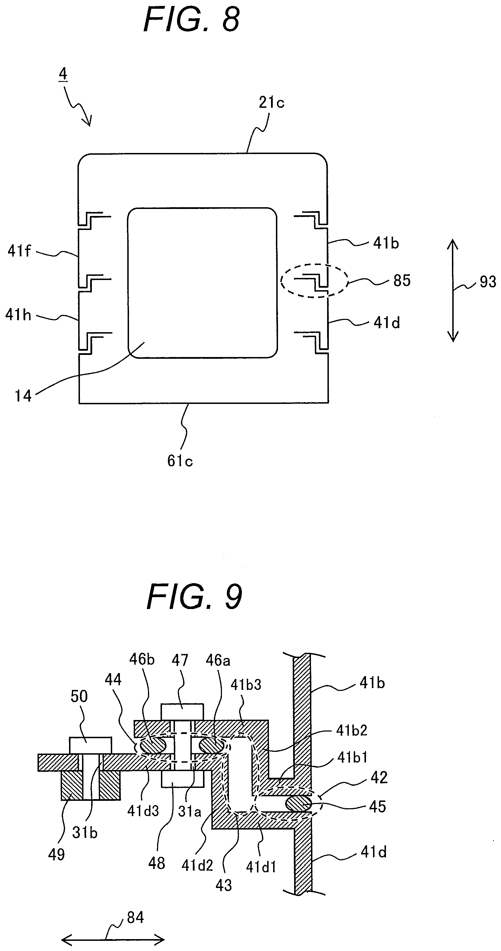

Referring to Figs. 8 to 10, a second embodiment of the wind power generator according to the present invention will be described below.

As the second embodiment of the wind power generator according to the present invention, Fig. 8 shows a section viewed along a broken line 82 shown in Fig. 3 and Fig. 9 is an enlarged view showing an area 85 encircled by a round broken line shown in Fig. 8.

Though in Fig. 8, a joint of an upside nacelle cover 21c and a side nacelle cover 41b (41f) respectively of a nacelle 4, a joint of the side nacelle cover 41b (41f) and a side nacelle cover 41d (41h) located on the downside of the side nacelle cover 41b (41f) and a joint of the side nacelle cover 41d (41h) and a bottom nacelle cover 61c are shown, the joint of the side nacelle cover 41b shown in Fig. 9 and the side nacelle cover 41d located on the downside of it will be representatively described below in this embodiment because all the joints have the same configuration.

As shown in Fig. 8, as to side nacelle covers 41a, 41b, 41c, 41d (side nacelle covers 41e, 41f, 41g, 41h on the opposite side), the side nacelle covers 41a, 41b (the side nacelle covers 41e, 41f on the opposite side) and the side nacelle covers 41c, 41d (the side nacelle covers 41g, 41h on the opposite side) respectively continuously arranged in an axial direction of a main shaft are arranged in a state in which they are piled in a vertical direction of the nacelle 4 (in a direction shown by an arrow 93), and each end of the side nacelle covers 41b, 41f covers each end of the adjacent side nacelle covers 41d, 41h from the upside in the vertical direction (it can also be said that each end of the side nacelle covers 41d, 41h enters the downside in the vertical direction of each end of the adjacent side nacelle covers 41b, 41f).

As shown in Fig. 9, each end of the side nacelle cover 41b and the side nacelle cover 41d is provided with a bent part, and a communicating part 42 with the outside, an inside communicating part 44 communicating with the inside of the nacelle 4 and an intermediate communicating part 43 that makes the inside communicating part 44 and the communicating part 42 with the outside communicate are configured by combining these bent parts.

To explain specifically using Fig. 9, in a joint of the side nacelle cover 41b and the side nacelle cover 41d, a bottom side end 41b1 of the side nacelle cover 41b is bent and extended inside in an L type, an upside side end 41d1 of the adjacent side nacelle cover 41d is bent and extended inside to be parallel with the L-type part of the bottom side end 41b1 of the side nacelle cover 41b via predetermined clearance, and the communicating part 42 with the outside is formed between the bottom side end 41b1 bent and extended inside of the side nacelle cover 41b and the bent part of the upside side end 41d1 of the side nacelle cover 41d.

Further, an edge (to be a part shown by a reference numeral 41b2) bent and extended in the L type of the bottom side end 41b1 of the side nacelle cover 41b is bent and extended upward to be parallel with a part except the bottom side end 41b1 of the side nacelle cover 41b, an extended edge (to be a part shown by a reference numeral 41b3) of the bent part 41b2 is further bent and extended to be parallel with the L-type bent part (41b1), an edge (to be a part shown by a reference numeral 41d2) bent and extended in an L type of the upside side end 41d1 of the side nacelle cover 41d is bent and extended upward to be parallel with a part except the L-type bent part (41b1) of the side nacelle cover 41b, an extended edge (to be a part shown by a reference numeral 41d3) of the bent part (41d2) is further bent and extended to be parallel with the L-type bent part (41b3) of the side nacelle cover 41b, and the intermediate communicating part 43 is formed among the bent parts (41b2, 41b3) bent and extended upward of the bottom side end 41b1 of the side nacelle cover 41b and the bent parts (41d1, 41d2) bent and extended upward of the upside side end 41d1 of the side nacelle cover 41d.

Further, the inside communicating part 44 is formed between the bent part 41b3 of the bottom side end 41b1 of the side nacelle cover 41b and the bent part 41d3 of the upside side end 41d1 of the side nacelle cover 41d in which extended edges of the bent parts (41b2, 41d2) bent and extended upward are further bent and extended to be parallel with the L-type bent parts (41b1, 41d1), a sealing member 45 made of silicon or fluororesin is arranged in the communicating part 42 with the outside, and sealing members 46a, 46b made of silicon or fluororesin are arranged in the inside communicating part 44.

Furthermore, the side nacelle cover 41b and the side nacelle cover 41d are fixed using a bolt 47 and a nut 48, and the side nacelle cover 41d is fixed to a frame 49 fixed to a tower 5 by a bolt 50. That is, the bottom side end 41b1 of the side nacelle cover 41b and the upside side end 41d1 of the side nacelle cover 41d are fastened by the bolt 47 and the nut 48, and the upside side end 41d1 of the side nacelle cover 41d is fixed to the frame 49 fixed to the tower 5 by the bolt 50.

Holes 31a, 31b provided to the side nacelle cover 41d for inserting the bolt 47 and the bolt 50 are a hole longer in a direction shown by an arrow 84 (in a direction perpendicular to the axial direction of the main shaft) and are adjustable to align end faces of the side nacelle cover 41b and the side nacelle cover 41d.

In the abovementioned configuration of this embodiment, when rain falls, raindrops that fall from above, rainwater discharged from the upside nacelle cover (for example, 21c) and raindrops blown up from the downside scatter over the side nacelle cover 41b and the side nacelle cover 41d. However, the penetration of rainwater inside the nacelle 4 can be prevented owing to the sealing member 45 provided to the communicating part 42 with the outside, and this effect can be maintained for a long term.

Since the sealing member 45 is exposed to external environment, sealing performance may be impaired because of aged deterioration. In this case, although rainwater may penetrate from the communicating part 42 with the outside, since rainwater accumulates in the intermediate communicating part 43 extended in a vertical direction, the rainwater does not reach the inside communicating part 44. Even if rainwater reaches the vicinity of the inside communicating part 44, the rainwater can be prevented from penetrating inside the nacelle 4 by the sealing members 46a, 46b installed in the inside communicating part 44. Accordingly, even if the sealing member 45 is damaged, rainwater can be prevented from penetrating inside the nacelle 4 in the structure in this embodiment.

Furthermore, since the sealing members 46a, 46b are basically not exposed to the weather, the deterioration hardly progresses and it can be expected that water-tightness is maintained for a long term. Furthermore, in the maintenance of the equipment and replacement work inside the nacelle 4, the upside nacelle cover and the side nacelle cover in a required part have only to be detached and for example, in a case that the side nacelle cover 41b is to be detached earlier when the upside nacelle cover 21c is detached, the overlap of the ends of the side nacelle cover 41b and the side nacelle cover 41d has only to be determined so that the side nacelle cover 41b can be detached earlier than the side nacelle cover 41d as shown in Fig. 10.

Furthermore, as shown in Fig. 9, since the bolt 47 and the nut 48 utilized for fixing the side nacelle cover 41b and the side nacelle cover 41d are provided inside the side nacelle cover 41b and the side nacelle cover 41d and an outer surface of the nacelle 4 has no protrusion, they do not disturb a flow of air around the nacelle 4 and hydrodynamic performance is not impaired. This is especially effective in in a so-called downwind type wind power generator provided with the blade 2 on the side of downwind of the nacelle 4.

### Third Embodiment

Referring to Figs. 4, 11 and 12, a third embodiment of the wind power generator according to the present invention will be described below.

For the third embodiment of the wind power generator according to the present invention, Fig. 4 shows a section viewed along the broken line 81 shown in Fig. 3 and Figs. 11 and 12 are enlarged views showing an area 84 encircled by a round broken line shown in Fig. 4.

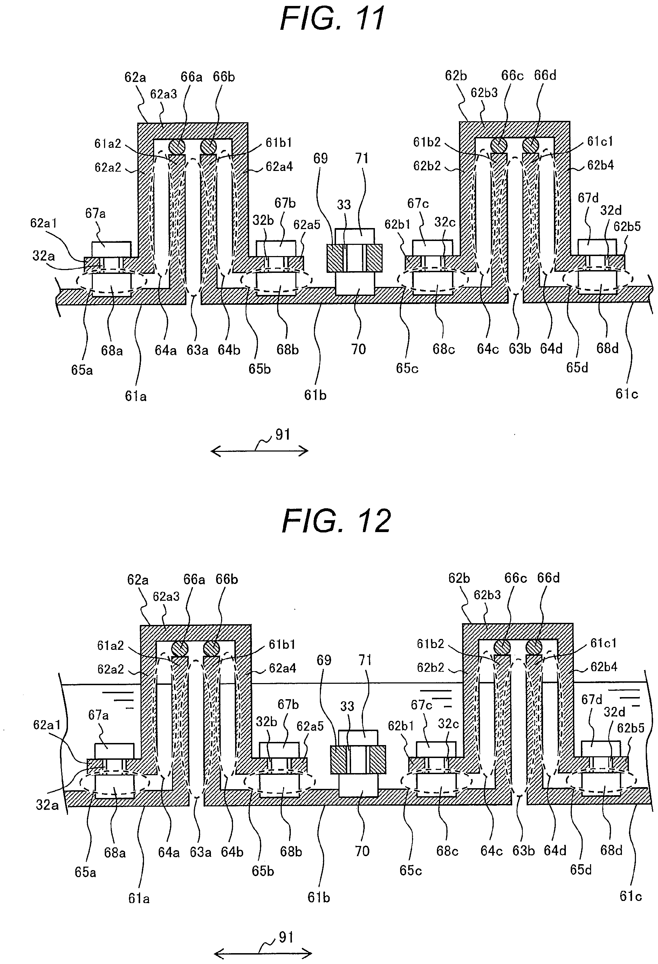

As shown in Figs. 4 and 11, a bottom nacelle cover is configured by plural bottom nacelle covers 61a, 61b, 61c, 61d respectively having a U-shaped section and is configured dividably by plural panels. Upside nacelle covers 21a, 21b, 21c, 21d and the bottom nacelle covers 61a, 61b, 61c, 61d are continuously arranged in an axial direction of a main shaft, respective both ends of the bottom nacelle covers 61a, 61b, 61c, 61d have a bent part, and communicating parts 63a, 63b with the outside, inside communicating parts 65a, 65b, 65c, 65d communicating with the inside of the nacelle 4 and intermediate communicating parts 64a, 64b 64c, 64d that make the inside communicating parts 65a, 65b, 65c, 65d and the communicating parts 63a, 63b with the outside communicate are configured by combining these bent parts.

To explain in the concrete using Fig. 11, in joints of the plural bottom nacelle covers 61a, 61b, 61c, 61d having the U-shaped section at the bottom of the nacelle 4, both ends (parts shown by reference numerals 61a2, 61b1, 61b2, 61c1 in Fig. 11) of the bottom nacelle covers 61a, 61b, 61c, 61d are bent and extended inside in an L type, each concave nacelle cover connecting member 62a, 62b is installed to cover the L-type bent parts of the ends of the bottom nacelle covers 61a, 61b, 61c, 61d (the parts shown by the reference numerals 61a2, 61b1, 61b2, 61c1 in Fig. 11), the communicating part 63a with the outside is formed between the L-type ends (the parts shown by the reference numerals 61a2, 61b1 in Fig. 11) of the bottom nacelle covers, and the communicating part 63b with the outside is formed between the L-type ends (the parts shown by the reference numerals 61b2, 61c1 in Fig. 11) of the bottom nacelle covers.

Further, each intermediate communicating part 64a, 64b is formed between each L-type end (61a2, 61bl) of the bottom nacelle covers 61a, 61b and each part (parts shown by 62a2, 62a4 in Fig. 11) of the concave nacelle cover connecting member 62a parallel with each L-type end (61a2, 61bl) of the bottom nacelle covers 61a, 61b, and each intermediate communicating part 64c, 64d is formed between each L-type end (61b2, 61c1) of the bottom nacelle covers 61b, 61c and each part (parts shown by 62b2, 62b4 in Fig. 11) of the concave nacelle cover connecting member 62b parallel with each L-type end (61b2, 61c1) of the bottom nacelle covers 61b, 61c.

Further, each inside communicating part 65a, 65b, 65c, 65d is formed between each part except the L-type ends (61a2, 61b1, 61b2, 61c1) of the bottom nacelle covers 61a, 61b, 61c and each part (each part shown by 62a1, 62a5, 62b1, 62b5 in Fig. 11) bent and extended from each concave end of the nacelle cover connecting members 62a, 62b to be parallel with each part except the L-type ends (61a2, 61b1, 61b2, 61c1) of the bottom nacelle covers 61a, 61b, 61c.

Furthermore, sealing members 66a, 66b made of silicon or fluororesin are provided between the communicating part 63a with the outside and each intermediate communicating part 64a, 64b, and sealing members 66c, 66d made of silicon or fluororesin are provided between the communicating part 63b with the outside and each intermediate communicating part 64c, 64d. That is, the sealing member 66a is arranged between an edge of the L-type end 61a2 of the bottom nacelle cover 61a and a nacelle cover connecting member 62a3, the sealing member 66b is arranged between an edge of the L-type end 61b1 of the bottom nacelle cover 61b and the nacelle cover connecting member 62a3, the sealing member 66c is arranged between an edge of the L-type end 61b2 of the bottom nacelle cover 61b and a nacelle cover connecting member 62b3, and the sealing member 66d is arranged between an edge of the L-type end 61c1 of the bottom nacelle cover 61c and the nacelle cover connecting member 62b3.

Furthermore, the bottom nacelle covers 61a, 61b, 61c and the nacelle cover connecting members 62a, 62b are fixed using nuts 68a, 68b, 68c, 68d fixed inside the bottom nacelle covers 61a, 61b, 61c and bolts 67a, 67b, 67c, 67d, and the bottom nacelle covers 61a, 61b, 61c are fixed to a frame 69 fixed to a tower 5 by a bolt 71. That is, the bent part (62a1) of the nacelle cover connecting member 62a is fixed to the nut 68a fixed to the bottom nacelle cover 61a by the bolt 67a, the bent part (62a5) of the nacelle cover connecting member 62a is fixed to the nut 68b fixed to the bottom nacelle cover 61b by the bolt 67b, the bent part (62b1) of the nacelle cover connecting member 62b is fixed to the nut 68c fixed to the bottom nacelle cover 61b by the bolt 67c, the bent part (62b5) of the nacelle cover connecting member 62b is fixed to the nut 68d fixed to the bottom nacelle cover 61c by the bolt 67d, and the bottom nacelle covers 61a, 61b, 61c are fixed to the frame 69 fixed to the tower 5 by the bolt 71. In this case, the nuts 68a, 68b, 68c, 68d have such thickness that space where each sealing member 66a, 66b, 66c, 66d is installed is appropriately acquired.

Furthermore, holes 32a, 32b, 32c, 32d and 33 provided to the bent parts (62a1, 62a5, 62b1, 62b5) of the nacelle cover connecting members 62a, 62b and the frame 69 for inserting the bolts 67a, 67b, 67c, 67d and the bolt 71 are a hole longer in a direction shown by an arrow 91 (in the axial direction of the main shaft) and thereby, clearance in the direction shown by the arrow 91 in the communicating parts 63a, 63b with the outside and the intermediate communicating parts 64a, 64b, 64c, 64d can be adjusted.

In the abovementioned configuration of this embodiment, when rain falls, it is conceivable that raindrops and others blown up from the downside scatter over the bottom nacelle covers 61a, 61b, 61c. However, rainwater can be prevented from penetrating inside the nacelle 4 by the sealing members 66a, 66b, 66c, 66d provided between the communicating part 63a with the outside and each intermediate communicating part 64a, 64b and between the communicating part 63b with the outside and each intermediate communicating part 64c, 64d, and this can be maintained for a long time.

Furthermore, since the sealing members 66a, 66b, 66c, 66d are exposed to the outside, sealing performance may decrease because of aged deterioration. However, since the communicating parts 63a, 63b with the outside have a sufficient dimension in a vertical direction, the nacelle has structure where raindrops and others blown up hardly reach the inside of the nacelle 4. Furthermore, in the maintenance of equipment and replacement work inside the nacelle 4, any of the bottom nacelle covers 61a, 61b 61c, 61d in a required part has only to be detached.

Furthermore, as shown in Fig. 11, the nuts 68a, 68b, 68c, 68d utilized for fixing each bottom nacelle cover 61a, 61b, 61c and each nacelle cover connecting member 62a, 62b are provided inside the bottom nacelle covers 61a, 61b, 61c and an outer surface of the nacelle 4 has no protrusion. Therefore, a flow of air around the nacelle 4 is not disturbed and hydrodynamic performance is not impaired. This is especially effective in a so-called downwind type wind power generator provided with a blade 2 on the side of downwind of the nacelle 4.

Furthermore, when lubricating oil leaks out of the equipment inside the nacelle 4, the lubricating oil accumulates in a U-shaped part directed upward and configured by the bottom nacelle cover 61b for example as shown in Fig. 12 and the lubricating oil can be prevented from leaking outside.

Even if all lubricating oil leaks out of the equipment inside the nacelle 4, it is desirable that the bottom nacelle covers 61a, 61b, 61c, 61d have depth in which all the lubricating oil can be accumulated. Furthermore, when a large quantity of lubricating oil leaks, a large load acts on the bottom nacelle covers 61a, 61b, 61c, 61d. However, since the bottom nacelle covers 61a, 61b, 61c, 61d are supported by the frame 69, the lubricating oil can be accumulated without breaking them.

Since lubricating oil can be accumulated inside in this way when the lubricating oil leaks out of the equipment inside the nacelle 4, the reliability of the equipment inside the nacelle 4 is enhanced and the effect is acquired that lubricating oil can be prevented from leaking outside when the lubricating oil leaks out of the equipment inside the nacelle 4.

The present invention is not limited to the abovementioned embodiments and various variations are included. For example, the abovementioned embodiments have been detailedly described to plainly explain the present invention, and the present invention is not necessarily limited to the embodiments provided with the abovementioned all configurations. As for some of the configurations in the embodiments, another configuration can be added, and a part of the configuration can be deleted or replaced.

### REFERENCE SIGNS LIST

1: Wind power generator, 2: Blade, 3: Hub, 4: Nacelle, 5: Tower, 11: Hub rotating shaft, 12, 16: Joint, 13: Input shaft to gearbox, 14: Gearbox, 15: Output shaft from gearbox, 17: Input shaft to generator, 18: Generator, 21a, 21b, 21c, 21d: Upside nacelle cover, 22, 42, 63a, 63b: Communicating part with outside, 23, 43, 64a, 64b, 64c, 64d: Intermediate communicating part, 24, 44, 65a, 65b, 65c, 65d: Inside communicating part, 25, 45, 46a, 46b, 66a, 66b, 66c, 66d: Sealing member, 26, 48, 68a, 68b, 68c, 68d, 70: Nut, 27, 29, 47, 50, 67a, 67b, 67c, 67d, 71: Bolt, 28, 49, 69: Frame, 30a, 30b, 31a, 31b, 32a, 32b, 32c, 32d, 33: Hole, 41a, 41b, 41c, 41d, 41e, 41f, 41g, 41h: Side nacelle cover, 61a, 61b, 61c, 61d: Bottom nacelle cover, 62a, 62b: Nacelle cover connecting member.

## Claims

1. A wind power generator (1) which is provided with a rotor configured by a hub (3) and blades, a generator (18) connected to the rotor via a main shaft connected to the hub (3), a nacelle (4) that houses at least the generator (18) and journals the rotor via the main shaft and a tower (5) that supports the nacelle at the top and in which the nacelle (4) is configured by a plurality of panels and a crust is formed by a nacelle cover having dividable structure, the wind power generator (1) comprising:
bent parts (21b1, 21c1) provided in a joint of ends of the plurality of nacelle covers,
wherein a communicating part with the outside, an inside communicating part communicating with the inside of the nacelle (4) and an intermediate communicating part that makes the inside communicating part and the communicating part with the outside communicate are formed between the bent parts (21b1, 21c1) in the joint of the ends of the adjacent nacelle covers;
wherein
a top face, a side and a bottom of the nacelle are respectively configured by the plurality of panels;
the crust is formed by the nacelle cover having dividable structure; **characterized in that** the bent parts (21b1, 21c1) are provided in a joint of ends of the respective plurality of nacelle covers to be the top face, the side and the bottom of the nacelle (4).

2. The wind power generator (1) according to Claim 1,
wherein the respective plurality of nacelle covers to be the top face and the bottom of the nacelle (4) are continuously arranged in an axial direction of the main shaft (17); and
the plurality of nacelle covers to be the side of the nacelle continuously arranged in the axial direction of the main shaft (17) are arranged in a vertical direction of the nacelle (4).

3. The wind power generator (1) according to Claim 1 or 2,
wherein in the joint of the plurality of nacelle covers to be the top face of the nacelle (4), an end of adjacent one upside nacelle cover is bent and extended inside in an L type, an end of the adjacent other upside nacelle cover is bent and extended inside in parallel with the L-type part of the one upside nacelle cover via predetermined clearance, and the communicating part (22) with the outside is formed between the bent parts of the ends of the one and other upside nacelle covers respectively bent and extended inside;
an edge bent and extended in the L type of the end of the other upside nacelle cover is bent and extended to be parallel with a part except the end of the one upside nacelle cover, the extended edge of the bent part is bent and extended outside to be parallel with the L-type ends of the one and other upside nacelle covers, and a part encircled by the other upside nacelle cover bent and extended outside, the other upside nacelle cover bent and extended to be parallel with the part except the end of the one upside nacelle cover, the one upside nacelle cover and the end bent and extended in the L type of the one upside nacelle cover functions as the intermediate communicating part; and
an edge of the other upside nacelle cover bent and extended outside is bent and extended to be parallel with the part except the end of the one upside nacelle cover and the inside communicating part is formed between the bent and extended part and the one upside nacelle cover.

4. The wind power generator (1) according to at least one of the Claims 1- 3, wherein a sealing member is arranged in the inside communicating part.

5. The wind power generator (1) according to Claim 3 or 4,
wherein the other upside nacelle cover is fixed to a frame fixed to the tower (5); and
the one upside nacelle cover and the other upside nacelle cover are fastened by inserting a bolt into a nut fixed inside the one upside nacelle cover.

6. The wind power generator (1) according to Claim 5,
wherein a hole longer in the axial direction of the main shaft (17) is formed in a part of the other upside nacelle cover; and
the bolt is fastened to the nut by inserting the bolt into the long hole.

7. The wind power generator (1) according to Claim 1 or 2,
wherein in a joint of an upside nacelle cover of the nacelle (4) and one side nacelle cover of the nacelle (4), and in a joint of the one side nacelle cover of the nacelle (4) and the other side nacelle cover of the nacelle and in a joint of the other side nacelle cover of the nacelle and a bottom nacelle cover of the nacelle, an end of the adjacent upside nacelle cover, an end on the downside of the adjacent one side nacelle cover and an end on the downside of the adjacent other side nacelle cover are bent and extended inside in an L type, an end on the upside of the adjacent one side nacelle cover, an end on the upside of the adjacent other side nacelle cover and an end of the adjacent bottom nacelle cover are bent and extended inside in parallel with respective L-type parts of the end of the upside nacelle cover, the end on the downside of the one side nacelle cover and the end on the downside of the other side nacelle cover via predetermined clearance, and the communicating part with the outside is formed between respective bent parts bent and extended inside of the end of the upside nacelle cover and the end on the upside of the one side nacelle cover, between respective bent parts bent and extended inside of the end on the downside of the one side nacelle cover and the end on the upside of the other side nacelle cover, and between respective bent parts bent and extended inside of the end on the downside of the other side nacelle cover and the end of the bottom nacelle cover;
edges bent and extended in the L type of the end of the upside nacelle cover (21a, 21b, 21c, 21d), the end on the downside of the one side nacelle cover and the end on the downside of the other side nacelle cover are bent and extended upward, to be parallel with parts except the respective ends bent in the L type of the upside nacelle cover, the one side nacelle cover and the other side nacelle cover, extended edges of the bent parts bent upward are further bent and extended to be parallel with the L-type bent parts, edges bent and extended in the L type of the end of the upside of the one side nacelle cover, the end on the upside of the other side nacelle cover and the end of the bottom nacelle cover are bent and extended upward to be parallel with parts except the respective L-type bent ends of the one side nacelle cover, the other side nacelle cover and the bottom nacelle cover, extended edges of the bent parts bent upward are further bent and extended to be parallel with the L-type bent parts, and the intermediate communicating part is formed between respective bent parts of the edge bent and extended upward of the upside nacelle cover and the edge on the upside of the one side nacelle cover, between respective bent parts of the edge on the downside of the one side nacelle cover and the edge on the upside of the other side nacelle cover and between respective bent parts of the edge on the downside of the other side nacelle cover and the edge of the bottom nacelle cover; and
the inside communicating part is formed between respective bent parts further bent and extended to be parallel with the L-type bent parts of the respective extended edges bent and extended upward of the end of the upside nacelle cover and the end on the upside of the one side nacelle cover, between respective bent parts further bent and extended to be parallel with the L-type bent parts of the respective extended edges bent and extended upward of the end on the downside of the one side nacelle cover and the end on the upside of the other side nacelle cover and between respective bent parts further bent and extended to be parallel with the L-type bent parts of the respective extended edges bent and extended upward of the end on the downside of the other side nacelle cover and the end of the bottom nacelle cover.

8. The wind power generator (1) according to Claim 7,
wherein a sealing member is respectively arranged in the communicating part with the outside and the inside communicating part.

9. The wind power generator (1) according to Claim 7 or 8,
wherein the edge of the upside nacelle cover and the edge on the upside of the one side nacelle cover in the inside communicating part, the edge on the downside of the one side nacelle cover and the edge on the upside of the other side nacelle cover in the inside communicating part, and the edge on the downside of the other side nacelle cover and the edge of the bottom nacelle cover in the inside communicating part are respectively fastened by a bolt and a nut; and
the edge on the upside of the one side nacelle cover, the edge on the upside of the other side nacelle cover and the bottom nacelle cover are fixed to a frame fixed to the tower (5).

10. The wind power generator (1) according to Claim 9,
wherein a hole longer in a horizontal direction perpendicular to the axial direction of the main shaft is formed in each one part of the edge on the downside of the one side nacelle cover, the edge on the downside of the other side nacelle cover and the bottom nacelle cover; and
the bolt is fastened to the nut by inserting the bolt into the long hole.

11. The wind power generator (1) according to Claim 1 or 2,
wherein both ends of the bottom nacelle cover are bent and extended inside in an L type in a joint of the plurality of nacelle covers to be the bottom of the nacelle, a concave nacelle cover connecting member is installed over L-type bent parts of the ends of the adjacent bottom nacelle covers with the member covering the L-type bent parts, and the communicating part with the outside is formed between the L-type ends of the adjacent bottom nacelle covers;
the intermediate communicating part is formed between the L-type end of the bottom nacelle cover and a part parallel with the L-type end of the bottom nacelle cover of the concave nacelle cover connecting member; and
the inside communicating part is formed between a part except the L-type end of the bottom nacelle cover and a part bent and extended from an end of a concave part of the nacelle cover connecting member to be parallel with the part except the L-type end of the bottom nacelle cover.

12. The wind power generator (1) according to Claim 11,
wherein the section of the bottom nacelle cover is formed to be U-shaped.

13. The wind power generator (1) according to Claim 11 or 12,
wherein a sealing member is arranged between an edge of the L-type end of the bottom nacelle cover and the nacelle cover connecting member.

14. The wind power generator (1) according to any of Claims 11 to 13,
wherein the bottom nacelle cover is fixed to a frame fixed to the tower (5); and
the nacelle cover connecting member and the nacelle cover connecting member are fastened by inserting a bolt into a nut fixed inside the nacelle cover connecting member.

## Patentansprüche

1. Windkraftgenerator (1), der mit einem Rotor, der durch eine Nabe (3) und durch Rotorblätter konfiguriert ist, einem Generator (18), der über eine Hauptwelle, die mit der Nabe (3) verbunden ist, mit dem Rotor verbunden ist, einer Gondel (4), die zumindest den Generator (18) aufnimmt und den Rotor über die Hauptwelle drehbar lagert, und einem Turm (5), der an der Spitze die Gondel trägt, versehen ist und in dem die Gondel (4) durch mehrere Platten konfiguriert ist und durch eine Gondelabdeckung, die eine teilbare Struktur aufweist, eine Schale gebildet ist, wobei der Windkraftgenerator (1) Folgendes umfasst:
gebogene Komponenten (21b1, 21c1), die in einer Nahtstelle der Enden der mehreren Gondelabdeckungen vorgesehen sind,
wobei zwischen den gebogenen Komponenten (21a1, 21c1) in der Nahtstelle der Enden der angrenzenden Gondelabdeckungen eine mit der Außenseite in Verbindung stehende Komponente, eine mit der Innenseite in Verbindung stehende Komponente, die mit der Innenseite der Gondel (4) in Verbindung steht, und eine Zwischenverbindungskomponente, die bewirkt, dass die mit der Innenseite in Verbindung stehende Komponente und die mit der Außenseite in Verbindung stehende Komponente in Verbindung stehen, gebildet sind;
wobei
eine Deckfläche, eine Seite und ein Boden der Gondel jeweils durch die mehreren Platten konfiguriert sind;
die Schale durch die Gondelabdeckung gebildet ist, die eine teilbare Struktur aufweist;
**dadurch gekennzeichnet, dass**
die gebogenen Komponenten (21b1, 21c1) in einer Nahtstelle der Enden der jeweiligen mehreren Gondelabdeckungen vorgesehen sind, die die Deckfläche, die Seite und den Boden der Gondel (4) bilden.

2. Windkraftgenerator (1) nach Anspruch 1,
wobei die jeweiligen mehreren Gondelabdeckungen, die die Deckfläche und den Boden der Gondel (4) bilden, in einer axialen Richtung der Hauptwelle (17) ununterbrochen angeordnet sind; und
die mehreren Gondelabdeckungen, die die Seite der Gondel bilden, die in der axialen Richtung der Hauptwelle (17) ununterbrochen angeordnet sind, in einer vertikalen Richtung der Gondel (4) angeordnet sind.

3. Windkraftgenerator (1) nach Anspruch 1 oder 2,
wobei in der Nahtstelle der mehreren Gondelabdeckungen, die die Deckfläche der Gondel (4) bilden, ein Ende einer angrenzenden Oberseitengondelabdeckung in einer L-Form gebogen und nach innen verlängert ist, ein Ende der angrenzenden anderen Oberseitengondelabdeckung über einen vorgegebenen Abstand parallel zur L-förmigen Komponente der einen Oberseitengondelabdeckung nach innen gebogen und verlängert ist und die mit der Außenseite in Verbindung stehende Komponente (22) zwischen den gebogenen Komponenten der Enden der einen und der anderen Oberseitengondelabdeckung gebildet ist, die jeweils nach innen gebogen und verlängert sind;
eine in der L-Form gebogene und verlängerte Kante des Endes der anderen Oberseitengondelabdeckung derart gebogen und verlängert ist, dass sie zu einer Komponente der einen Oberseitengondelabdeckung ausschließlich des Endes parallel ist, wobei die verlängerte Kante der gebogenen Komponente derart nach außen gebogen und verlängert ist, dass sie zu den L-förmigen Enden der einen und der anderen Oberseitengondelabdeckung parallel ist und eine Komponente, die von der anderen Oberseitengondelabdeckung umgeben ist, nach außen gebogen und verlängert ist, wobei die andere Oberseitengondelabdeckung derart gebogen und verlängert ist, dass sie zur Komponente der einen Oberseitengondelabdeckung ausschließlich des Endes parallel ist, wobei die eine Oberseitengondelabdeckung und das in der L-Form gebogene und verlängerte Ende der einen Oberseitengondelabdeckung als die Zwischenverbindungskomponente fungieren; und
eine nach außen gebogene und verlängerte Kante der anderen Oberseitengondelabdeckung derart gebogen und verlängert ist, dass sie zur Komponente der einen Oberseitengondelabdeckung ausschließlich des Endes parallel ist, und die mit der Innenseite in Verbindung stehende Komponente zwischen der gebogenen und verlängerten Komponente und der einen Oberseitengondelabdeckung gebildet ist.

4. Windkraftgenerator (1) nach mindestens einem der Ansprüche 1-3, wobei in der mit der Innenseite in Verbindung stehenden Komponente ein Dichtungselement angeordnet ist.

5. Windkraftgenerator (1) nach Anspruch 3 oder 4,
wobei die andere Oberseitengondelabdeckung an einem Rahmen befestigt ist, der am Turm (5) befestigt ist; und
die eine Oberseitengondelabdeckung und die andere Oberseitengondelabdeckung durch Einsetzen einer Schraube in eine Mutter, die in der einen Oberseitengondelabdeckung befestigt ist, festgeschraubt sind.

6. Windkraftgenerator (1) nach Anspruch 5,
wobei in einer Komponente der anderen Oberseitengondelabdeckung ein Loch ausgebildet ist, das in der axialen Richtung der Hauptwelle (17) länger ist; und
die Schraube durch Einsetzen der Schraube in das Langloch an der Mutter festgeschraubt wird.

7. Windkraftgenerator (1) nach Anspruch 1 oder 2,
wobei in einer Nahtstelle einer Oberseitengondelabdeckung der Gondel (4) und einer Seitengondelabdeckung der Gondel (4) und in einer Nahtstelle der einen Seitengondelabdeckung der Gondel (4) und der anderen Seitengondelabdeckung der Gondel und in einer Nahtstelle der anderen Seitengondelabdeckung der Gondel und einer Bodengondelabdeckung der Gondel ein Ende der angrenzenden Oberseitengondelabdeckung, ein Ende auf der Unterseite der angrenzenden einen Seitengondelabdeckung und ein Ende auf der Unterseite der angrenzenden anderen Seitengondelabdeckung in einer L-Form nach innen gebogen und verlängert sind, wobei ein Ende auf der Oberseite der angrenzenden einen Seitengondelabdeckung, ein Ende auf der Oberseite der angrenzenden anderen Seitengondelabdeckung und ein Ende der angrenzenden Bodengondelabdeckung über einen vorgegebenen Abstand parallel zu den jeweiligen L-förmigen Komponenten des Endes der Oberseitengondelabdeckung, des Endes auf der Unterseite der einen Seitengondelabdeckung und des Endes auf der Unterseite der anderen Seitengondelabdeckung nach innen gebogen und verlängert sind und die mit der Außenseite in Verbindung stehende Komponente zwischen den jeweiligen nach innen gebogenen und verlängerten, gebogenen Komponenten des Endes der Oberseitengondelabdeckung und des Endes auf der Oberseite der einen Seitengondelabdeckung, zwischen den jeweiligen nach innen gebogenen und verlängerten, gebogenen Komponenten des Endes auf der Unterseite der einen Seitengondelabdeckung und des Endes auf der Oberseite der anderen Seitengondelabdeckung und zwischen den jeweiligen nach innen gebogenen und verlängerten, gebogenen Komponenten des Endes auf der Unterseite der anderen Seitengondelabdeckung und des Endes der Bodengondelabdeckung gebildet ist;
wobei die Kanten (21a, 21b, 21c, 21d) des Endes der Oberseitengondelabdeckung in der L-Form gebogen und verlängert sind, das Ende auf der Unterseite der einen Seitengondelabdeckung und das Ende auf der Unterseite der anderen Seitengondelabdeckung derart nach oben gebogen und verlängert sind, dass sie zu den Komponenten ausschließlich der jeweiligen in der L-Form gebogenen Enden der Oberseitengondelabdeckung, der einen Seitengondelabdeckung und der anderen Seitengondelabdeckung parallel sind, wobei die verlängerten Kanten der nach oben gebogenen, gebogenen Komponenten ferner derart gebogen und verlängert sind, dass sie zu den in der L-Form gebogenen Komponenten parallel sind, wobei die in der L-Form gebogenen und verlängerten Kanten des Endes der Oberseite der einen Seitengondelabdeckung, des Endes der Oberseite der anderen Seitengondelabdeckung und des Endes der Bodengondelabdeckung derart nach oben gebogen und verlängert sind, dass sie zu den Komponenten ausschließlich der jeweiligen in der L-Form gebogenen Enden der einen Seitengondelabdeckung, der anderen Seitengondelabdeckung und der Bodengondelabdeckung parallel sind, wobei die verlängerten Kanten der nach oben gebogenen, gebogenen Komponenten ferner derart gebogen und verlängert sind, dass sie zu den L-förmig gebogenen Komponenten parallel sind und die Zwischenverbindungskomponente zwischen den jeweiligen gebogenen Komponenten der nach oben gebogenen und verlängerten Kante der Oberseitengondelabdeckung und der Kante auf der Oberseite der einen Seitengondelabdeckung, zwischen den jeweiligen gebogenen Komponenten der Kante auf der Unterseite der einen Seitengondelabdeckung und der Kante auf der Oberseite der anderen Seitengondelabdeckung und zwischen den jeweiligen gebogenen Komponenten der Kante auf der Unterseite der anderen Seitengondelabdeckung und der Kante der Bodengondelabdeckung gebildet ist; und
die mit der Innenseite in Verbindung stehende Komponente zwischen den jeweiligen gebogenen Komponenten, die ferner derart gebogen und verlängert sind, dass sie zu den L-förmig gebogenen Komponenten der jeweiligen nach oben gebogenen und verlängerten, verlängerten Kanten des Endes der Oberseitengondelabdeckung parallel sind, und dem Ende auf der Oberseite der einen Seitengondelabdeckung, zwischen den jeweiligen gebogenen Komponenten, die ferner derart gebogen und verlängert sind, dass sie zu den L-förmig gebogenen Komponenten der jeweiligen nach oben gebogenen und verlängerten, verlängerten Kanten des Endes auf der Unterseite der einen Seitengondelabdeckung parallel sind, und dem Ende auf der Oberseite der anderen Seitengondelabdeckung und zwischen den jeweiligen gebogenen Komponenten, die ferner derart gebogen und verlängert sind, dass sie zu den L-förmig gebogenen Komponenten der jeweiligen nach oben gebogenen und verlängerten, verlängerten Kanten des Endes auf der Unterseite der anderen Seitengondelabdeckung parallel sind, und dem Ende der Bodengondelabdeckung gebildet ist.

8. Windkraftgenerator (1) nach Anspruch 7,
wobei in der Verbindungskomponente jeweils ein Dichtungselement mit der mit der Außenseite in Verbindung stehenden Komponente und mit der mit der Innenseite in Verbindung stehenden Komponente angeordnet ist.

9. Windkraftgenerator (1) nach Anspruch 7 oder 8,
wobei die Kante der Oberseitengondelabdeckung und die Kante auf der Oberseite der einen Seitengondelabdeckung in der mit der Innenseite in Verbindung stehenden Komponente, die Kante auf der Unterseite der einen Seitengondelabdeckung und die Kante auf der Oberseite der anderen Seitengondelabdeckung in der mit der Innenseite in Verbindung stehenden Komponente und die Kante auf der Unterseite der anderen Seitengondelabdeckung und die Kante der Bodengondelabdeckung in der mit der Innenseite in Verbindung stehenden Komponente jeweils mit einer Schraube und einer Mutter festgeschraubt sind; und
die Kante auf der Oberseite der einen Seitengondelabdeckung, die Kante auf der Oberseite der anderen Seitengondelabdeckung und die Bodengondelabdeckung an einem Rahmen befestigt sind, der am Turm (5) befestigt ist.

10. Windkraftgenerator (1) nach Anspruch 9,
wobei in jeweils einer Komponente der Kante auf der Unterseite der einen Seitengondelabdeckung, der Kante auf der Unterseite der anderen Seitengondelabdeckung und der Bodengondelabdeckung ein Loch ausgebildet ist, das in einer horizontalen Richtung länger ist, die zur axialen Richtung der Hauptwelle senkrecht ist; und
die Schraube durch Einsetzen der Schraube in das Langloch an der Mutter festgeschraubt wird.

11. Windkraftgenerator (1) nach Anspruch 1 oder 2,
wobei die beiden Enden der Bodengondelabdeckung in einer Nahtstelle der mehreren Gondelabdeckungen in einer L-Form nach innen gebogen und verlängert sind, um den Boden der Gondel zu bilden, ein konkaves Gondelabdeckungsverbindungselement über den L-förmig gebogenen Komponenten der Enden der angrenzenden Bodengondelabdeckungen installiert ist, wobei das Element die L-förmig gebogenen Komponenten abdeckt und die mit der Außenseite in Verbindung stehende Komponente zwischen den L-förmigen Enden der angrenzenden Bodengondelabdeckungen gebildet ist;
die Zwischenverbindungskomponente zwischen dem L-förmigen Ende der Bodengondelabdeckung und einer Komponente des konkaven Gondelabdeckungsverbindungselements gebildet ist, die zum L-förmigen Ende der Bodengondelabdeckung parallel ist; und
die mit der Innenseite in Verbindung stehende Komponente zwischen einer Komponente der Bodengondelabdeckung ausschließlich des L-förmigen Endes und einer Komponente gebildet ist, die aus einem Ende einer konkaven Komponente des Gondelabdeckungsverbindungselements derart gebogen und verlängert ist, dass sie zur Komponente der Bodengondelabdeckung ausschließlich des L-förmigen Endes parallel ist.

12. Windkraftgenerator (1) nach Anspruch 11,
wobei der Abschnitt der Bodengondelabdeckung derart ausgebildet ist, dass er U-förmig ist.

13. Windkraftgenerator (1) nach Anspruch 11 oder 12,
wobei zwischen einer Kante des L-förmigen Endes der Bodengondelabdeckung und dem Gondelabdeckungsverbindungselement ein Dichtungselement angeordnet ist.

14. Windkraftgenerator (1) nach einem der Ansprüche 11 bis 13,
wobei die Bodengondelabdeckung an einem Rahmen befestigt ist, der am Turm (5) befestigt ist; und
das Gondelabdeckungsverbindungselement und das Gondelabdeckungsverbindungselement durch Einsetzen einer Schraube in eine Mutter, die im Gondelabdeckungsverbindungselement befestigt ist, festgeschraubt werden.

## Revendications

1. Générateur d'énergie éolienne (1) qui est doté d'un rotor configuré par un moyeu (3) et des pales, un générateur (18) connecté au rotor via un arbre principal connecté au moyeu (3), une nacelle (4) qui abrite au moins le générateur (18) et supporte le rotor en rotation via l'arbre principal, et une tour (5) qui supporte la nacelle au sommet et dans lequel la nacelle (4) est configurée par une pluralité de panneaux, et une peau est formée par une couverture de nacelle ayant une structure divisible, le générateur d'énergie éolienne (1) comprenant :
des parties cintrées (21b1, 21c1) prévues dans un joint des extrémités de la pluralité de couvertures de nacelle,
dans lequel une partie de communication avec l'extérieur, une partie de communication avec l'intérieur qui communique avec l'intérieur de la nacelle (4), et une partie de communication intermédiaire qui amène la partie de communication intérieure et la partie de communication avec l'extérieur à communiquer, sont formées entre les parties cintrées (21 b 1, 21c1) dans le joint des extrémités des couvertures de nacelle adjacentes ;
dans lequel
une face supérieure, un côté et un fond de la nacelle sont respectivement configurés par la pluralité de panneaux ;
la peau est formée par la couverture de nacelle ayant une structure divisible ;
**caractérisé en ce que**
les parties cintrées (21b1, 21c1) sont prévues dans un joint des extrémités de la pluralité respective de couvertures de nacelle pour être la face supérieure, le côté et le fond de la nacelle (4).

2. Générateur de puissance éolienne (1) selon la revendication 1,
dans lequel la pluralité respective de couvertures de nacelle destinées à être la face supérieure et le fond de la nacelle (4) sont agencées en continu dans une direction axiale de l'arbre principal (17) ; et
la pluralité de couvertures de nacelle destinées à être le côté de la nacelle agencé dans la direction axiale de l'arbre principal (17) sont agencées dans une direction verticale de la nacelle (4).

3. Générateur de puissance éolienne (1) selon la revendication 1 ou 2, dans lequel dans le joint de la pluralité de couvertures de nacelle destinées à être la face supérieure de la nacelle (4), une extrémité d'une couverture de nacelle adjacente tournée vers le haut est cintrée et s'étend vers l'intérieur dans un type en L, une extrémité de l'autre couverture de nacelle adjacente tournée vers le haut est cintrée et s'étend vers l'intérieur parallèlement à la partie de type en L de la première couverture de nacelle tournée vers le haut via un jeu prédéterminé, et la partie de communication (22) avec l'extérieur est formée entre les parties cintrées des extrémités de l'une et de l'autre des couvertures de nacelle tournées vers le haut qui sont respectivement cintrées et s'étendent vers l'intérieur ;
une bordure cintrée et en extension dans un type en L de l'extrémité de l'autre couverture de nacelle tournée vers le haut est cintrée et en extension pour être parallèle avec une partie à l'exception de l'extrémité de la première couverture de nacelle tournée vers le haut, la bordure en extension de la partie cintrée est cintrée et en extension vers l'extérieur pour être parallèle avec les extrémités de type en L de l'une et de l'autre des couvertures de nacelle tournées vers le haut, et une partie encerclée par l'autre couverture de nacelle tournée vers le haut est cintrée et en extension vers l'extérieur, l'autre couverture de nacelle tournée vers le haut est cintrée et en extension pour être parallèle avec la partie à l'exception de l'extrémité de la première couverture de nacelle tournée vers le haut, la première couverture de nacelle tournée vers le haut et l'extrémité cintrée et en extension du type en L de la première couverture de nacelle tournée vers le haut a pour fonction celle de la partie de communication intermédiaire ; et
une bordure de l'autre couverture de nacelle tournée vers le haut cintrée et en extension vers l'extérieur est cintrée et en extension pour être parallèle avec la partie, à l'exception de l'extrémité de la première couverture de nacelle tournée vers le haut, et la partie de communication vers l'intérieur est formée entre la partie cintrée et en extension et la première couverture de nacelle tournée vers le haut.

4. Générateur de puissance éolienne (1) selon l'une au moins des revendications 1 à 3, dans lequel un élément d'étanchement est agencé dans la partie de communication vers l'intérieur.

5. Générateur de puissance éolienne (1) selon la revendication 3 ou 4, dans lequel l'autre couverture de nacelle tournée vers le haut est fixée à un cadre fixé sur la tour (5) ; et
la première couverture de nacelle tournée vers le haut et l'autre couverture de nacelle tournée vers le haut sont fixées en introduisant un boulon dans un écrou fixé à l'intérieur de la première couverture de nacelle tournée vers le haut.

6. Générateur de puissance éolienne (1) selon la revendication 5,
dans lequel un trou plus long dans la direction axiale de l'arbre principal (17) est formé dans une partie de l'autre couverture de nacelle tournée vers le haut ; et
le boulon est fixé à l'écrou en introduisant le boulon dans le trou allongé.

7. Générateur de puissance éolienne (1) selon la revendication 1 ou 2, dans lequel, dans un joint d'une couverture de nacelle tournée vers le haut de la nacelle (4) et d'une couverture de nacelle latérale de la nacelle (4), et dans un joint de la première couverture de nacelle latérale de la nacelle (4) et de l'autre couverture de nacelle latérale de la nacelle, et dans un joint de l'autre couverture de nacelle latérale de la nacelle et d'une couverture de nacelle au fond de la nacelle, une extrémité de la couverture de nacelle tournée vers le haut adjacente, une extrémité sur le côté tourné vers le bas de la première couverture de nacelle latérale adjacente, et une extrémité sur le côté tourné vers le bas de l'autre couverture de nacelle latérale adjacente sont cintrées et en extension vers l'intérieur dans un type en L, une extrémité du côté tourné vers le haut de la couverture de nacelle latérale adjacente, une extrémité du côté tourné vers le haut de l'autre couverture de nacelle latérale adjacente, et une extrémité de la couverture de nacelle inférieure adjacente sont cintrées et en extension vers l'intérieur en parallèle avec des parties respectives du type en L de l'extrémité de la couverture de nacelle tournée vers le haut, de l'extrémité sur le côté tourné vers le bas de la première couverture de nacelle latérale et de l'extrémité sur le côté tourné vers le bas de l'autre couverture de nacelle latérale via un jeu prédéterminé, et la partie de communication avec l'extérieur est formée entre les parties cintrées respectives qui sont cintrées et en extension vers l'intérieur de l'extrémité de la couverture de nacelle tournée vers le haut et l'extrémité sur le côté tourné vers le haut de la première couverture de nacelle latérale, entre des parties cintrées respectives et en extension vers l'intérieur de l'extrémité sur le côté tourné vers le bas de la première couverture de nacelle latérale et de l'extrémité sur le côté tourné vers le haut de l'autre couverture de nacelle latérale, et entre des parties cintrées respectives qui sont cintrées et en extension vers l'intérieur de l'extrémité sur le côté tourné vers le bas de l'autre couverture de nacelle latérale et de l'extrémité de la couverture de nacelle au fond ;
des bordures cintrées et en extension de type en L de l'extrémité de la couverture de nacelle tournée vers le haut (21a, 21b, 21c, 21d), de l'extrémité sur le côté tourné vers le bas de la première couverture de nacelle latérale et de l'extrémité sur le côté tourné vers le bas de l'autre couverture de nacelle latérale sont cintrées et en extension vers le haut pour être parallèles avec des parties à l'exception des extrémités respectives cintrées en forme de L de la couverture de nacelle tournée vers le haut, de la première couverture de nacelle latérale et de l'autre couverture de nacelle latérale, des bordures en extension des parties cintrées qui sont cintrées vers le haut sont en outre cintrées et en extension pour être parallèles avec les parties cintrées de type en L, des bordures cintrées et en extension de type en L de l'extrémité de la partie tournée vers le haut de la première couverture de nacelle latérale, l'extrémité sur le côté tourné vers le haut de l'autre couverture de nacelle latérale et l'extrémité de la couverture de nacelle au fond sont cintrées et en extension vers le haut pour être parallèles avec des parties à l'exception des extrémités cintrées respectives de type en L de la première couverture de nacelle latérale, de l'autre couverture de nacelle latérale et de la couverture de nacelle au fond, des bordures en extension des parties cintrées qui sont cintrées vers le haut sont en outre cintrées et en extension pour être parallèles avec les parties cintrées de type en L, et la partie de communication intermédiaire est formée entre des parties cintrées respectives de la bordure cintrée et en extension vers le haut de la couverture de nacelle tournée vers le haut, et de la bordure sur le côté tournée vers le haut de la première couverture de nacelle latérale, entre des parties cintrées respectives de la bordure sur le côté tourné vers le bas de la première couverture de nacelle latérale et de la bordure sur le côté tourné vers le haut de l'autre couverture de nacelle latérale et entre des parties cintrées respectives de la bordure sur le côté tourné vers le bas de l'autre couverture de nacelle latérale et de la bordure de la couverture de nacelle au fond ; et
la partie de communication vers l'intérieur est formée entre des parties cintrées respectives qui sont en outre cintrées et en extension pour être parallèles avec les parties cintrées de type en L des bordures respectives en extension qui sont cintrées et en extension vers le haut de l'extrémité de la couverture de nacelle tournée vers le haut et de l'extrémité sur le côté tourné vers le haut de la première couverture de nacelle latérale, entre des parties cintrées respectives qui sont en outre cintrées et en extension pour être parallèles avec les parties cintrées de type en L des bordures respectives en extension qui sont cintrées et en extension vers le haut de l'extrémité sur le côté tourné vers le bas de la première couverture de nacelle latérale et de l'extrémité sur le côté tourné vers le haut de l'autre couverture de nacelle latérale, et entre des parties cintrées respectives qui sont en outre cintrées et en extension pour être parallèles avec les parties cintrées de type en L des bordures respectives en extension qui sont cintrées et en extension vers le haut de l'extrémité sur le côté tourné vers le bas de l'autre couverture de nacelle latérale et l'extrémité de la couverture de nacelle au fond.

8. Générateur de puissance éolienne (1) selon la revendication 7,
dans lequel un élément d'étanchement est respectivement agencé dans la partie de communication avec l'extérieur et la partie de communication vers l'intérieur.

9. Générateur de puissance éolienne (1) selon la revendication 7 ou 8, dans lequel la bordure de la couverture de nacelle tournée vers le haut et la bordure sur le côté tourné vers le haut de la première couverture de nacelle latérale dans la partie de communication vers l'intérieur, la bordure sur le côté tourné vers le bas de la première couverture de nacelle latérale et la bordure sur le côté tourné vers le haut de l'autre couverture de nacelle latérale dans la partie de communication vers l'intérieur, et la bordure sur le côté tourné vers le bas de l'autre couverture de nacelle latérale et la bordure de la couverture de nacelle au fond dans la partie de communication vers l'intérieur sont respectivement fixées par un boulon et un écrou ; et
la bordure sur le côté tourné vers le haut de la première couverture de nacelle latérale, la bordure sur le côté tourné vers le haut de l'autre couverture de nacelle latérale et la couverture de nacelle au fond sont fixées sur un cadre fixé sur la tour (5).

10. Générateur de puissance éolienne (1) selon la revendication 9,
dans lequel un trou plus long dans une direction horizontale perpendiculaire à la direction axiale de l'arbre principal est formé dans chacune d'une partie de la bordure sur le côté tourné vers le bas de la première couverture de nacelle latérale, de la bordure sur le côté tourné vers le bas de l'autre couverture de nacelle latérale et de la couverture de nacelle au fond ; et
le boulon est fixé à l'écrou en introduisant le boulon dans le trou allongé.

11. Générateur de puissance éolienne (1) selon la revendication 1 ou 2, dans lequel les deux extrémités de la couverture de nacelle au fond sont cintrées et en extension vers l'intérieur dans un type en L dans un joint de la pluralité de couvertures de nacelle pour former le fond de la nacelle, un élément de connexion de couverture de nacelle concave est installé par-dessus des parties cintrées de type en L des extrémités des couvertures de nacelle de fond adjacentes avec l'élément couvrant les parties cintrées du type en L, et la partie de communication avec l'extérieur est formée entre les extrémités de type en L des couvertures de nacelle de fond adjacentes ;
la partie de communication intermédiaire est formée entre l'extrémité de type en L de la couverture de nacelle au fond et une partie parallèle avec l'extrémité de type en L de la couverture de nacelle au fond de l'élément de connexion de couverture de nacelle concave ; et
la partie de communication vers l'intérieur est formée entre une partie à l'exception de l'extrémité de type en L de la couverture de nacelle au fond et une partie cintrée et en extension depuis une extrémité d'une partie concave de l'élément de connexion de couverture de nacelle pour être parallèle avec la partie à l'exception de l'extrémité de type en L de la couverture de nacelle au fond.

12. Générateur de puissance éolienne (1) selon la revendication 11,
dans lequel la section de la couverture de nacelle au fond est formée pour avoir une forme en U.

13. Générateur de puissance éolienne (1) selon la revendication 11 ou 12,
dans lequel un élément d'étanchement est agencé entre une bordure de l'extrémité de type en L de la couverture de nacelle au fond et l'élément de connexion de couverture de nacelle.

14. Générateur de puissance éolienne (1) selon l'une quelconque des revendications 11 à 13,
dans lequel la couverture de nacelle au fond est fixée à un cadre fixé sur la tour (5) ; et
l'élément de connexion de couverture de nacelle et l'élément de connexion de couverture de nacelle sont fixés en introduisant un boulon dans un écrou fixé à l'intérieur de l'élément de connexion de couverture de nacelle.
